# FASCICULE DE BREVET EUROPEEN

(11) **EP 0 400 498 B1**
(45) Date de publication et mention de la délivrance du brevet: **11.08.1993**
(21) Numéro de dépôt: 90109958.0
(22) Date de dépôt: 25.05.1990
(51) Int. Cl.: B60B 11/10, B60C 7/12

(54) **Roue auxiliaire à jumeler temporairement à une roue de véhicule, dispositif de roulage ainsi obtenu**
Zeitweilig angebrachtes Ersatz-Zwillingsrad und damit rollende Vorrichtung
Temporarily attached auxiliary double wheel and running device obtained by that means

(30) Priorité: 01.06.1989 FR 8907495
(43) Date de publication de la demande: 05.12.1990
(73) Titulaire: COMPAGNIE GENERALE DES ETABLISSEMENTS MICHELIN - MICHELIN & CIE, 63040 Clermont-Ferrand Cédex (FR)
(72) Inventeur: Pompier, Jean-Pierre, F-63530 Volvic (FR)
(74) Mandataire: Bauvir, Jacques

(56) Documents cités:
- FR-A- 1 408 477
- FR-E- 21 822
- GB-A- 960 323
- US-A- 2 742 941
- US-A- 3 024 070
- US-A- 3 770 323
- REVUE AUTOMOBILE. vol. 82, no. 48, 27 novembre 1987, BERNE CH page 5 "le retour du pneu plein?"

## Description

La présente invention concerne les roues pour automobile. Plus particulièrement elle se rapporte aux roues à utiliser temporairement en cas d'avarie survenant à un pneumatique, ou bien en cas de roulage dans des conditions difficiles, comme sur de la boue ou de la neige.

A l'heure actuelle, lorsque l'un des pneumatiques montés sur les roues d'un véhicule a subi une crevaison, il faut démonter la roue concernée et la remplacer par une roue en réserve, communément appelée roue de secours. Une autre possibilité connue dans l'état de la technique consiste à monter une roue de secours juste à côté du pneumatique dégonflé, sans démonter celui-ci, qui correspond au préambule de la revendication 1. On en trouve une illustration dans le brevet GB 967 397. Dans la suite, on appellera "roue auxiliaire" une telle roue de secours, et "roue principale" la roue normalement montée sur le véhicule, contre laquelle on vient jumeler la roue auxiliaire en cas d'avarie au pneumatique monté sur la roue principale.

Ces roues auxiliaires n'ont pas trouvé d'application pratique, bien qu'elles soient fort séduisantes en théorie puisque les opérations de mise en place sont simplifiées par rapport au remplacement d'une roue par une autre, en réserve sur le véhicule.

La difficulté non résolue dans l'état de la technique, consiste à concilier deux impératifs contradictoires. Il faut que les moyens d'attache de la roue auxiliaire à la roue principale permettent une manipulation d'une extrême simplicité pour l'automobiliste, afin que l'usage d'une telle roue auxiliaire confère un progrès majeur par rapport à l'usage classique d'une roue de réserve. Il faut aussi que les moyens d'attache soient suffisamment solides pour maintenir la roue auxiliaire rigoureusement parallèle à la roue principale, pour que l'usage d'une telle roue auxiliaire puisse se faire avec un niveau de sécurité suffisant.

En outre, le poids et l'encombrement d'une telle roue auxiliaire doivent se comparer favorablement avec ceux d'une roue de secours, notamment une roue de secours de type à usage temporaire comme on en trouve sur certaines voitures. Il faut également que le principe de montage de la roue auxiliaire sur la roue principale n'entraîne pas pour cette dernière, une élévation substantielle de son poids, une augmentation trop importante de son prix de revient, ni une détérioration de son aspect esthétique.

Selon l'invention, la roue auxiliaire comportant un disque et une jante supportant un anneau souple, ladite roue auxiliaire étant destinée à être jumelée à une roue principale par des moyens de jumelage comprenant un pivot disposé de façon excentrée sur le disque de la roue auxiliaire, et permettant, au cours du montage, une rotation relative de la roue auxiliaire et de la roue principale autour dudit pivot de façon à centrer la roue auxiliaire par rapport à la roue principale, est caractérisée en ce que les moyens de jumelage comportent en outre des moyens de guidage disposés sur le disque de la roue auxiliaire en arc de cercle centré sur le pivot, permettant de relier la roue auxiliaire à la roue principale tout en autorisant un glissement desdites roues l'une par rapport à l'autre.

D'autres objectifs et perfectionnements aparaîtront dans la suite où l'on décrit en détails un exemple de roue auxiliaire réalisée conformément à l'invention.

La figure 1 est une vue générale de la roue auxiliaire.

La figure 2 est une coupe selon II-II à la figure 1.

La figure 3 montre l'adaptation prévue au disque de la roue principale.

Les figures 4 et 5 illustrent le montage.

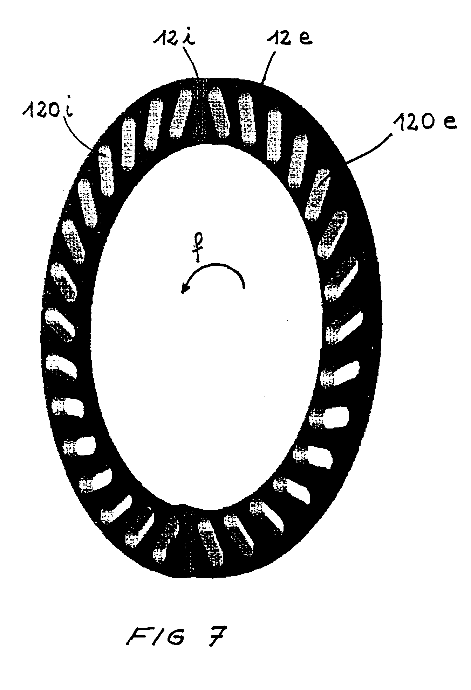

La figure 6 montre un détail des moyens de jumelage.

La figure 7 montre une variante de réalisation de l'anneau souple ceinturant la roue auxiliaire.

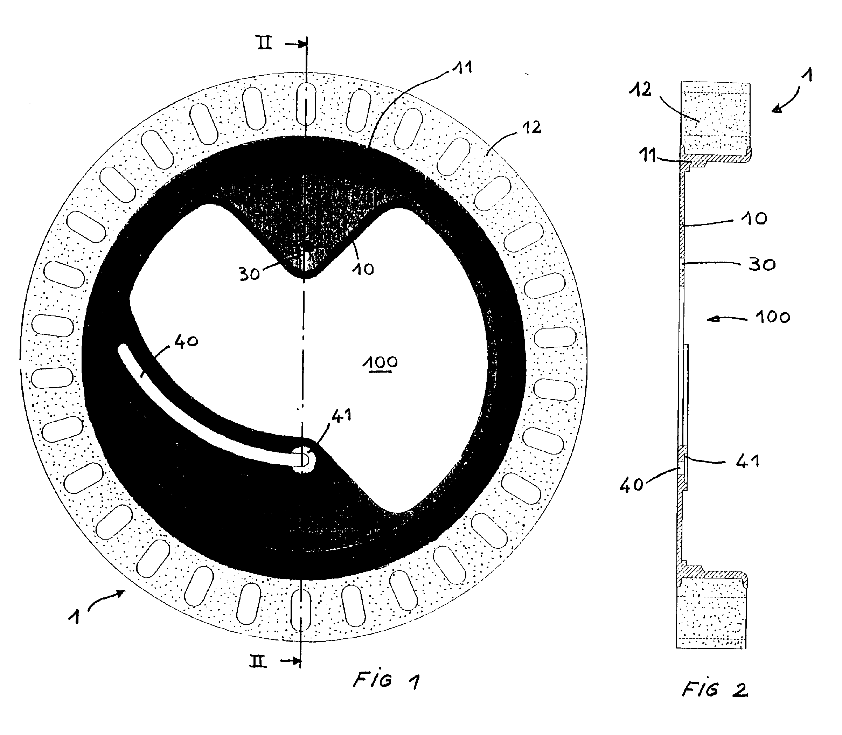

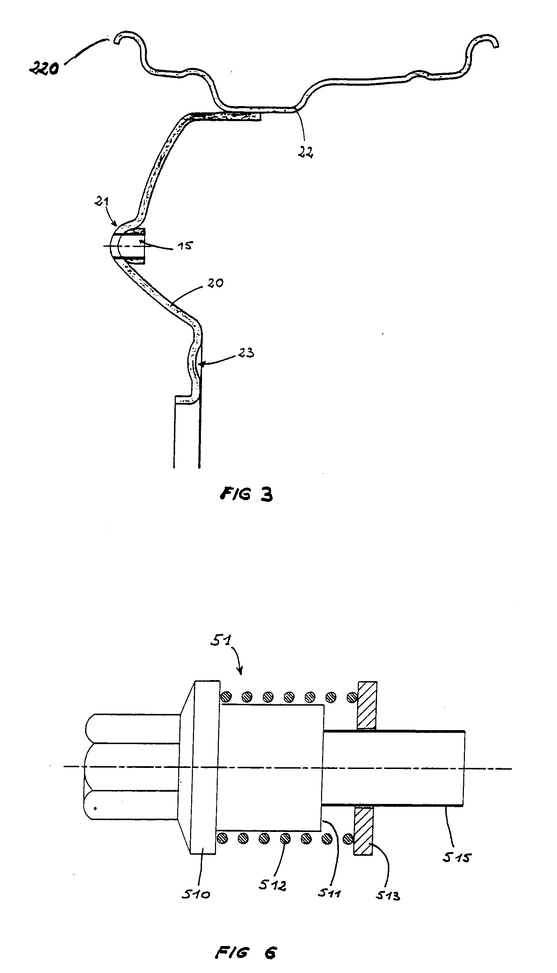

Les figures 1 et 2 permettent de bien comprendre la constitution de la roue auxiliaire 1. Celle-ci comporte un disque 10 plat supportant les moyens de jumelage. Le disque 10 est évidé au maximum possible dans un souci d'allégement et aussi de facilité d'installation, le large évidement 100 permettant de bien voir la roue principale lors du montage. La roue auxiliaire 1 comporte également une jante 11 supportant un anneau souple, ici constitué par un bandage en caoutchouc 12, mais qui pourrait également être un pneumatique. Le diamètre extérieur de la roue auxiliaire 1 correspond sensiblement au diamètre de la roue principale 2 lorsque le pneumatique 24 est gonflé à la pression nominale.

Les moyens de jumelage de la roue auxiliaire 1 à la roue principale comportent essentiellement un pivot et des moyens de guidages diposés en arc de cercle centré sur le pivot. Ces moyens de guidage doivent constituer une glissière qui empêche la roue auxiliaire de s'écarter de la roue principale, tout en permettant la rotation de la roue auxiliaire 1 autour du pivot définissant un axe de rotation perpendiculaire au disque 10 de la roue auxiliaire 1 et au disque 20 de la roue principale 2 lors du jumelage.

Le disque 10 comporte donc un perçage 30 définissant l'implantation du pivot, et une lumière 40 disposée en arc de cercle autour du perçage 30. On voit encore un logement 41 dont le rôle sera expliqué plus loin.

Le jumelage de la roue auxiliaire 1 à la roue principale 2 nécessite quelques adaptations de celle-ci, apparaissant plus particulièrement à la figure 3. Les moyens de jumelage proposés dans le cadre de la présente invention permettent de ne prévoir, sur le disque 20 de la roue principale 2, qu'une modification extrêmement simple, peu onéreuse et discrète. Il s'agit de prévoir au moins deux trous taraudés 15 et de préférence d'en disposer quatre, répartis sur le pourtour du disque 20, à égale distance l'un de l'autre et à égale distance du centre de la roue principale 2. De préférence, on les dispose aussi éloignés que possible dudit centre de la roue principale 2. L'axe de ces trous est parallèle à l'axe de rotation de la roue principale 2. Pour les roues en tôle, on les dispose par exemple au sommet du bossage compris entre la jante 22 et la zone 23 de fixation de la roue principale 2 au moyeu du véhicule, comme cela apparaît bien à la figure 3.

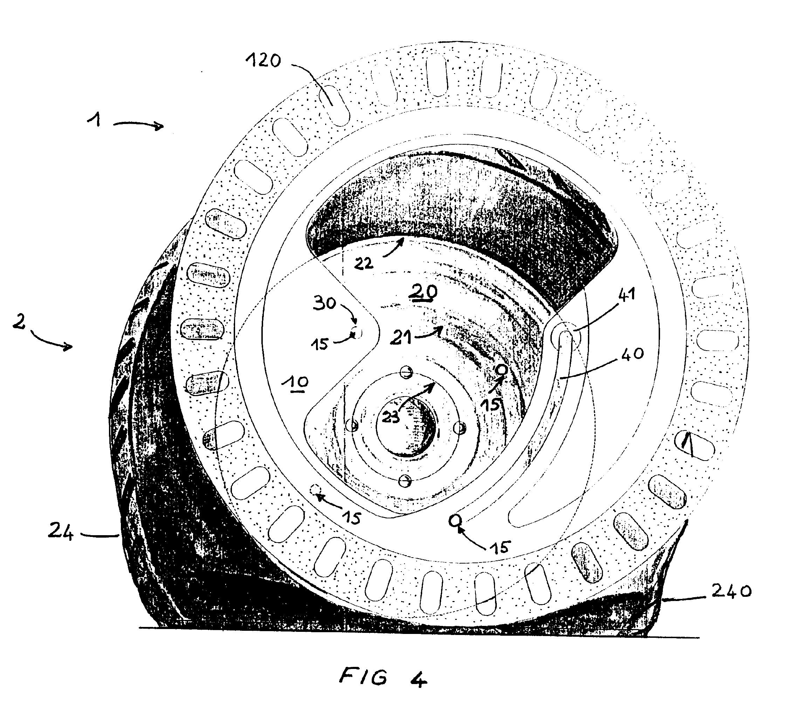

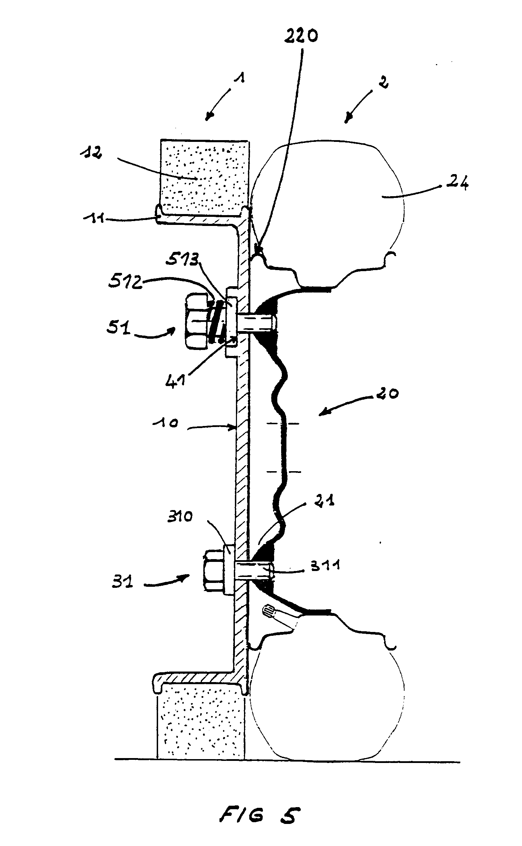

On va maintenant expliquer le montage de la roue auxiliaire 1 en relation avec les figures 4 et 5, ce qui fera comprendre aussi quelques caractéristiques du dispositif de roulage de secours constitué en associant la roue auxiliaire 1 et la roue principale 2, par les moyens de jumelage décrits, qui prévoient une adaptation de la roue principale.

L'ajout de la roue auxiliaire 1 à la roue principale 2 modifie le déport du point de contact au sol du véhicule. Or le déport est un paramètre important qui a une grande influence sur le comportement du véhicule, sur sa tenue de route. Il s'agit donc de rendre aussi faible que possible ce supplément de déport dû au maintien en place de la roue principale. Ces considérations dictent la forme de la section méridienne de la roue auxiliaire 1, comme elle apparaît à la figure 5, en relation avec la section méridienne de la roue principale 2.

Le disque 10 de la roue auxiliaire 1 est sensiblement plan, et relié à la jante 11 à l'extrémité axialement intérieure de celle-ci. La roue principale 2 idéale est celle où le rebord 220 de la jante 22 est axialement au même niveau que le bossage 21 du disque 20, comme représenté sur les figures 3 et 5. Ce disque 10 de la roue auxiliaire 1 est en contact avec le disque 20 de la roue principale 2, au niveau des bossage 21, ce qui permet une bonne fixation par blocage des éléments de fixation (pivot et moyens de guidage), lorsque la roue auxiliaire 1 est centrée sur la roue principale 2.

Si ledit bossage 21 est décalé axialement vers l'intérieur, alors, comme le disque 10 de la roue auxilaire 1 doit rester sensiblement plan pour permettre un excentrement suffisant et/ou une liaison à la roue principale 2 en des points suffisamment écartés, il faut prévoir des épaisseurs, sous forme de rondelles par exemple, permettant le blocage final sans déformer le disque 10 de la roue auxiliaire de façon excessive.

Si ledit bossage 21 est décalé axialement vers l'extérieur, alors la liaison mécanique ne pose aucun problème, mais en conservant la même roue auxiliaire 1, on augmente le déport.

Le montage est réalisé de la façon illustrée plus particulièrement à la figure 4. Sur la roue principale 2, on recherche celui des trous taraudés 15 qui se trouve compris dans le quartier du disque 20 situé dans le quart supérieur gauche, c'est-à-dire en reprenant une expression évocatrice courante, entre 9 heures et 12 heures. Dans le perçage 30 aménagé sur le disque 10 de la roue auxiliaire, on engage un axe 31 formant pivot, comportant une tête 310 destinée à maintenir axialement le disque 10 par rapport au disque 20, et un filetage 311. On introduit le filetage 311 dans le trou taraudé 15 choisi comme expliqué ci-avant. On serre l'axe 31 de façon à ce que les disques 10 et 20 se positionnent parallèlement l'un par rapport à l'autre. Ce pneumatique 24 est supposé dégonflé lors du montage de la roue auxiliaire 1, comme le montre la figure 4. Notons que le montage se ferait de la même façon quel que soit l'état de gonflage du pneumatique 24 car le flanc de celui-ci déborde par rapport à la jante. On peut envisager de jumeler un dispositif de dépannage pour améliorer l'adhérence sur routes verglacées par exemple. Lors du serrage de l'axe 31, la roue auxiliaire 1 doit donc nécessairement être excentrée par rapport à la roue principale 2, ceci d'autant plus qu'il faudra le plus souvent monter la roue auxiliaire 1 par dessus les flancs 240 du pneumatique 24.

Ensuite, on visse l'extrémité filetée 515 d'une tige 51 dans celui des trous taraudés 15 qui apparaît alors au travers de la lumière 40. Cette tige 51 comporte une tête 510, une butée 511, et un ressort 512 qui tend à maintenir une rondelle 513 écartée de la butée 511. Dans un premier temps, on visse la tige 51 jusqu'à ce que la rondelle 513 appuie fermement sur le disque 10 de la roue auxiliaire 1, de part et d'autre de la lumière 40. On a ainsi matérialisé les moyens de guidage de la roue auxiliaire 1 par rapport à la roue principale 2. Un déplacement du véhicule, soit en avant soit en arrière, permet ensuite le centrage de la roue auxiliaire 1 par rapport à la roue principale 2 par une rotation de la roue auxiliaire 1 autour de l'axe 31 constituant un pivot, de par l'action du poids du véhicule dès que le bandage 12 entre en contact avec le sol. La figure 5 représente l'allure du dispositif de roulage de secours après une telle rotation.

De préférence, on prévoit des moyens de blocage qui interdisent tout retour à une position excentrée de la roue auxiliaire 1 par rapport à la roue principale 2. C'est le rôle du logement 41 qui peut recevoir la rondelle 513 lorsque la concentricité des roues 1 et 2 est réalisée. Pour terminer le montage, il suffit de terminer le blocage de la tige 51 jusqu'à ce que la butée 511 entre en contact avec la rondelle 513, immobilisant ainsi axialement le disque 20.

Pour réduire autant que possible les altérations du comportement du véhicule dues à l'augmentation du déport, on a prévu de nombreux évidements 120 conférant au bandage 12 une grande souplesse dans le sens circonférentiel. Ce moyen se révèle très efficace. On peut également prévoir de nombreuses incisions radiales.

La figure 7 illustre d'autres mesures que l'on peut prendre pour corriger le tirage du véhicule. Il s'agit, par exemple, de réaliser le bandage 12 de façon à ce que sa bande de roulement se déforme en cône dans un sens ou dans l'autre selon le couple appliqué, moteur ou freineur, pour compenser le tirage indésirable.

On peut obtenir cet effet en disposant deux bandages élastiques 12i, 12e en caoutchouc côte à côte sur ladite jante 11, celui 12i desdits bandages disposé du côté de la roue principale 2 comportant des incisions inclinées circonférentiellement en arrière 120i par rapport au sens d'avancement repéré par la flèche f, et l'autre 12e comportant des incisions inclinées circonférentiellement dans l'autre sens 120e. A la figure 7, le bandage 12i apparaît partiellement, sur un arc de 180° seulement, l'autre portion étant otée pour laisser apercevoir le bandage 12e.

L'invention permet donc la réalisation d'un dispositif de roulage de secours par montage de la roue auxiliaire décrite à une roue principale qui reste en place sur le véhicule. Selon l'invention, la réalisation d'un guidage, séparé du pivot, assure, contrairement à ce que l'on trouve dans l'état de la technique, une excellente tenue mécanique de la liaison de la roue auxiliaire à la roue principale, tout en permettant une conception extrêmement légère. En effet, les points d'appuis de la roue auxiliaire sur la roue principale peuvent être écartés les uns des autres et remplissent leur fonction de guidage même au cours du montage par rotation relative, pendant que les roues sont encore excentrées.

Ce dispositif peut être utilisé en lieu et place de la roue de secours traditionnelle, ou peut être aussi utilisé lors de circonstances telles que, par exemple, celles qui requièrent l'utilisation de chaînes pour rouler sur route enneigée. Dans ce cas, on monte un tel dispositif au moins sur chacune des roues d'un essieu et la bande de roulement du bandage 12 est pourvue d'une sculpture adaptée et/ou pourvue d'un équipement adapté, comme par exemple un cloutage.

## Revendications

1. Roue auxiliaire (1), comportant un disque (10) et une jante (11) supportant un anneau souple (12), ladite roue auxiliaire étant destinée à être jumelée à une roue principale (2) par des moyens de jumelage comprenant un pivot (31) disposé de façon excentrée sur le disque de la roue auxiliaire, et permettant, au cours du montage, une rotation relative de la roue auxiliaire et de la roue principale autour dudit pivot de façon à centrer la roue auxiliaire par rapport à la roue principale, caractérisée en ce que les moyens de jumelage comportent en outre des moyens de guidage (40, 51) disposés sur le disque de la roue auxiliaire en arc de cercle centré sur le pivot (31), permettant de relier la roue auxiliaire à la roue principale tout en autorisant un glissement desdites roues l'une par rapport à l'autre.

2. Roue auxiliaire selon la revendication 1, caractérisée en ce que les moyens de jumelage comportent en outre des moyens de blocage interdisant tout mouvement relatif de la roue auxiliaire par rapport à la roue principale lorsque ces deux roues sont concentriques.

3. Roue auxiliaire selon la revendication 1 ou 2, caractérisée en ce que les moyens de guidage sont constitués essentiellement par une lumière (40) aménagée sur le disque (10) de la roue auxiliaire (1), et par une tige (51) munie d'une tête (510), ladite tige assurant la retenue du disque (10) de la roue auxiliaire (1) en coopération avec le disque (20) de la roue principale (2).

4. Roue auxiliaire selon la revendication 2, caractérisée en ce que les moyens de blocage comportent une rondelle (513) disposée autour de la tige (51), en appui sur ladite tête (10) par l'intermédiaire d'un ressort (512) sollicité en compression, et en appui sur le disque (10) de la roue auxiliaire (1) de part et d'autre de la lumière (40), et comportent à l'une des extrémités de la lumière (40), un logement (41) aménagé sur la surface du disque (10) de la roue auxiliaire (1), destiné à recevoir ladite rondelle (513) en position de blocage.

5. Roue auxiliaire selon la revendication 1, caractérisée en ce que ledit anneau souple est constitué par un bandage élastique (12) en caoutchouc, comportant une multitude d'incisions radiales (120).

6. Roue auxiliaire selon la revendication 1, caractérisée en ce que ledit anneau souple est constitué par deux bandages élastiques (12i, 12e) en caoutchouc, disposés côte à côte sur ladite jante, celui desdits (12i) bandages disposé du côté de la roue principale comportant des incisions inclinées circonférentiellement en arrière (120i) par rapport au sens d'avancement, et l'autre (12e) comportant des incisions inclinées circonférentiellement dans l'autre sens (120e).

7. Dispositif de roulage de secours dans lequel une roue auxiliaire (1), comportant un disque (10) et une jante (11) supportant un anneau souple (12), est jumelée à une roue principale (2) par des moyens de jumelage comprenant un pivot (31) disposé de façon excentrée sur le disque (10) de la roue auxiliaire (1), et permettant, au cours du montage, une rotation relative de la roue auxiliaire (1) et de la roue principale (2) autour dudit pivot de façon à centrer la roue auxiliaire (1) par rapport à la roue principale (2), caractérisé en ce que les moyens de jumelage comportent en outre des moyens de guidage (40,51) disposés sur le disque de la roue auxiliaire en arc de cercle centré sur le pivot (31), permettant de relier la roue auxiliaire à la roue principale tout en autorisant un glissement desdites roues l'une par rapport à l'autre.

8. Dispositif selon la revendication 7, caractérisé en ce que le disque (20) de roue principale (2) comporte quatre trous taraudés (15) répartis sur ce disque, en ce que ledit pivot est constitué par un axe (31) comportant à l'une de ses extrémités une tête (310) destinée à coopérer avec le disque (10) de ladite roue auxiliaire (1), et à l'autre de ses extrémités un filetage (311) permettant le montage dudit axe (31) sur l'un desdits trous taraudés (15).

9. Dispositif selon la revendication 8, caractérisé en ce que le disque de la roue principale comporte quatre trous taraudés (15), et en ce que les moyens de guidage sont constitués essentiellement par une lumière (40) aménagée sur le disque (10) de la roue auxiliaire (1), et par une tige (51) munie d'une tête (511), ladite tige (51) assurant la retenue du disque (10) de la roue auxiliaire (1) en coopération avec le disque (20) de la roue principale (2).

10. Dispositif selon la revendication 9, caractérisé en ce que les moyens de jumelage comportent des moyens de blocage comportant une rondelle (513) disposée autour de la tige (51), en appui sur ladite tête (511) par l'intermédiaire d'un ressort (512) sollicité en compression, et en appui sur le disque (10) de la roue auxiliaire (1) de part et d'autre de la lumière (40), et comportant à l'une des extrémités de la lumière (40), un logement (41) aménagé sur la surface du disque (10) de la roue auxiliaire (1), destiné à recevoir ladite rondelle (513) en position de blocage.

## Patentansprüche

1. Hilfsrad (1), das eine Scheibe (10) und eine Felge (11) aufweist, die einen biegsamen Ring (12) tragen, wobei das Hilfsrad dazu bestimmt ist, an einem Hauptrad (2) mit Hilfe von Kopplungsvorrichtungen angekoppelt zu werden, die einen exzentrisch auf der Scheibe des Hilfsrads angeordneten Drehzapfen (31) umfassen, der im Laufe der Montage eine relative Drehung des Hilfsrads und des Hauptrads um den Drehzapfen ermöglicht, um so das Hilfsrad bezüglich des Hauptrads zu zentrieren, dadurch gekennzeichnet, daß die Kopplungsvorrichtungen zusätzlich auf der Scheibe des Hillfsrads auf einem um den Drehzapfen (31) zentrierten Kreisbogen angeordnete Führungsvorrichtungen (40, 51) Umfassen, die es ermöglichen, das Hilfsrad unter Zulassung einer Verschiebung der Räder gegeneinander am Hauptrad zu befestigen.

2. Hilfsrad nach Anspruch 1, dadurch gekennzeichnet, daß die Kopplungsvorrichtungen zusätzlich Blockiervorrichtungen umfassen, die jede relative Bewegung des Hilfsrads bezüglich des Hauptrads verhindert, wenn die beiden Räder konzentrisch sind.

3. Hilfsrad nach Anspruch 1 oder 2, dadurch gekennzeichnet, daß die Führungsvorrichtungen im wesentlichen aus einem auf der Scheibe (10) des Hilfsrads (1) angebrachten Langloch (40) und einem mit einem Kopf (510) versehenen Stift (51) bestehen, wobei der Stift zusammen mit der Scheibe (20) des Hauptrads (2) die Verankerung der Scheibe (10) des Hilfsrads (1) sicherstellt.

4. Hilfsrad nach Anspruch 2, dadurch gekennzeichnet, daß die Blockiervorrichtungen eine um den Stift (51) angeordnete, über eine auf Kompression beanspruchte Feder (512) auf den Kopf (510) drückende und auf beiden Seiten des Langlochs (40) auf die Scheibe (10) des Hilfsrads (1) drückende Unterlegscheibe (513) umfassen sowie an einem Ende des Langlochs (40) eine in der Oberfläche der Scheibe (10) des Hilfsrads (1) angebrachte Aussparung (41) umfassen, die dazu bestimmt ist, in Blockierstellung die Unterlegscheibe (513) aufzunehmen.

5. Hilfsrad nach Anspruch 1, dadurch gekennzeichnet, daß der biegsame Ring aus einer elastischen Ummantelung (12) aus Gummi gebildet wird, die eine Vielzahl radialer Einschnitte (120) aufweist.

6. Hilfsrad nach Anspruch 1, dadurch gekennzeichnet, daß der biegsame Ring aus zwei elastischen Ummantelungen (12i, 12e) aus Gummi gebildet wird, die Seite an Seite auf der Felge (11) angebracht sind, wobei die an der Seite des Hauptrads angebrachte Ummantelung (12i) in Umfangsrichtung bezüglich der Bewegungsrichtung nach hinten geneigte Einschnitte (120i) und die andere (12e) in Umfangsrichtung entgegengesetzt geneigte Einschnitte (120e) aufweist.

7. Hilfsfahrvorrichtung, bei der ein Hilfsrad (1), das eine Scheibe (10) und eine Felge (11) aufweist, die einen biegsamen Ring (12) tragen, an einem Hauptrad (2) mit Hilfe von Kopplungsvorrichtungen angekoppelt ist, die einen exzentrisch auf der Scheibe (10) des Hilfsrads (1) angeordneten Drehzapfen (31) umfassen, der im Laufe der Montage eine relative Drehung des Hilfsrads (1) und des Hauptrads (2) um den Drehzapfen ermöglicht, um so das Hilfsrad (1) bezüglich des Hauptrads (2) zu zentrieren, dadurch gekennzeichnet, daß die Kopplungsvorrichtungen zusätzlich auf der Scheibe des Hilfsrads auf einem um den Drehzapfen (31) zentrierten Kreisbogen angeordnete Führungsvorrichtungen (40, 51) umfassen, die es ermöglichen, das Hilfsrad unter Zulassung einer Verschiebung der Räder gegeneinander am Hauptrad zu befestigen.

8. Vorrichtung nach Anspruch 7, dadurch gekennzeichnet, daß die Scheibe (20) des Hauptrads (2) vier auf der Scheibe verteilte Gewindelöcher (15) aufweist und daß der Drehzapfen aus einer Achse (31) besteht, die an einem ihrer Enden einen Kopf (310), der dazu bestimmt ist, mit der Scheibe (10) des Hilfsrads (1) zusammenzuwirken, und am anderen Ende ein Gewinde (311) aufweist, das die Montage der Achse (31) in einem der Gewindelöcher (15) ermöglicht.

9. Vorrichtung nach Anspruch 8, dadurch gekennzeichnet, daß die Scheibe (20) des Hauptrads (2) vier Gewindelöcher (15) aufweist und daß die Führungsvorrichtungen im wesentlichen aus einem auf der Scheibe (10) des Hilfsrads (1) angebrachten Langloch (40) und einem mit einem Kopf (510) versehenen Stift (51) bestehen, wobei der Stift zusammen mit der Scheibe (20) des Hauptrads (2) die Verankerung der Scheibe (10) des Hilfsrads (1) sicherstellt.

10. Vorrichtung nach Anspruch 9, dadurch gekennzeichnet, daß die Kopplungsvorrichtungen Blockervorrichtungen umfassen, die eine um den Stift (51) angeordnete, über eine auf Kompression beanspruchte Feder (512) auf den Kopf (510) drückende und auf beiden Seiten des Langlochs (40) auf die Scheibe (10) des Hilfsrads (1) drückende Unterlegscheibe (513) umfassen, und die an einem Ende des Langlochs (40) eine in der Oberfläche der Scheibe (10) des Hilfsrads (1) angebrachte Aussparung (41) umfassen, die dazu bestimmt ist, in Blockierstellung die Unterlegscheibe (513) aufzunehmen.

## Claims

1. An auxiliary wheel (1) comprising a disk (10) and a rim (11) supporting a resilient ring (12) said auxiliary wheel to be paired with a main wheel (2) using pairing means comprising a pivot means (31) in an eccentric position on the disk of the auxiliary wheel for relative rotation of the auxiliary wheel and the main wheel about said pivot during mounting in order to centre the auxiliary wheel relative to the main wheel, characterized in that the pairing means also include guide means (40,51) on the disk of the auxiliary wheel, said guide means being positioned in an arc of a circle centred on the pivot (31) for coupling the auxiliary wheel to the main wheel so that the said wheels may slide one relative to the other.

2. The auxiliary wheel of claim 1 characterized in that the pairing means also include locking means preventing all movement of the auxiliary wheel relative to the main wheel when the two wheels are coaxial.

3. The auxiliary wheel of claim 1 or 2, characterized in that the guide means comprise essentially a slot (40) in the disk (10) of the auxiliary wheel (1) and a rod (51) with a head (510) the said rod holding the disk (10) of the auxiliary wheel (1) in place in conjunction with the disk (20) of the main wheel (2).

4. The auxiliary wheel of claim 2 characterized in that the locking means comprise a washer (513) fitted on the rod (51) and held against the said head (510) by a spring (512) under compression and against the disk (10) of the auxiliary wheel (1) on either side of the slot (40) as well as a housing (41) at one end of the slot (40) on the disk (10) of the auxiliary wheel (1) the said housing to receive the said washer (513) in the locking position.

5. The auxiliary wheel of claim 1 characterized in that the said resilient ring is a non pneumatic resilient rubber tyre (12) with a number of radial incisions (120).

6. The auxiliary wheel of claim 1 characterized in that the said resilient ring comprises two non pneumatic resilient rubber tyres (12i,12e) placed side by side on the said rim, one of which (12i) being placed by the main wheel and having incisions (120i) inclined circumferentially backward relative to the direction of travel and the other (12e) having incisions (120e) inclined circumferentially in the other direction.

7. An emergency travelling device in which an auxiliary wheel (1) comprising a disk (10) and a rim (11) supporting a resilient ring (12) is paired with a main wheel (2) using pairing means incorporating a pivot (31) in an eccentric position on the disk (10) of the auxiliary wheel (1) for pivoting the auxiliary wheel (1) relative to the main wheel (2) about said pivot means during mounting in order to centre the auxiliary wheel (1) relative to the main wheel (2) and characterized in that the pairing means also comprise guide means (40,51) on the disk of the auxiliary wheel said guide means being arranged in an arc of a circle centred on the pivot means (31) for coupling the auxiliary wheel with the main wheel so that the said wheels may slide one relative to the other.

8. The device of claim 7 characterized in that the disk (20) of the main wheel (2) comprises four tapped holes (15) distributed on the periphery of the disk and in that the said pivot means is made of a bolt (31) with a head (310), at one end, designed to act in conjunction with the disk (10) of the said auxiliary wheel (1) and a threaded portion (311), at the other end, to screw the said bolt (31) into one of the said tapped holes (15).

9. The device of claim 8 characterized in that the disk of the main wheel includes four tapped holes (15) and in that the guide means are essentially made of a slot (40) in the disk (10) of the auxiliary wheel (1) and of a rod (51) with a head (511) the said rod (51) holding the disk (10) of the auxiliary wheel (1) in place in conjunction with the disk (20) of the main wheel (2).

10. The device of claim 9 characterized in that the pairing means include locking means incorporating a washer (513) fitted on the rod (51) the said washer resting on the said head (511) through the action of a spring (512) under compression and on the disk (10) of the auxiliary wheel (1) on either side of the slot (40) with, in addition, at one end of the slot (40) a housing (41) on the disk (10) of the auxiliary wheel (1) to receive the said washer (513) in the locking position.
